# EUROPÄISCHE PATENTSCHRIFT

(11) **EP 3 401 236 B1**
(45) Veröffentlichungstag und Bekanntmachung des Hinweises auf die Patenterteilung: **14.08.2024**
(21) Anmeldenummer: 18167657.8
(22) Anmeldetag: 17.04.2018
(51) Int. Cl.: B65F 1/00, G06Q 10/04, G06Q 10/00, B65F 1/14

(54) **INTELLIGENTES MÜLLENTSORGUNGSSYSTEM UND -VERFAHREN**
INTELLIGENT WASTE DISPOSAL SYSTEM AND METHOD
SYSTÈME INTELLIGENT D'ÉLIMINATION DES DÉCHETS ET PROCÉDÉ

(30) Priorität: 11.05.2017 DE 102017004557
(43) Veröffentlichungstag der Anmeldung: 14.11.2018
(73) Patentinhaber: FAUN Umwelttechnik GmbH & Co. KG, 27711 Osterholz-Scharmbeck (DE)
(72) Erfinder: Kirchhoff, Dr. Johannes F., 58636 Iserlohn (DE)
(74) Vertreter: Laufhütte, Dieter

(56) Entgegenhaltungen:
- WO-A1-2012/015664
- WO-A1-2016/040601
- GB-A- 2 433 871
- GB-A- 2 452 587
- US-A1- 2012 141 247
- US-A1- 2014 172 174
- US-A1- 2014 278 630

## Beschreibung

Die Erfindung betrifft ein intelligentes Müllentsorgungssystem und -verfahren.

Die effiziente Entsorgung von Müll in modernen Städten erfährt durch das globale Bevölkerungswachstum und den stetigen Zuzug von Menschen in städtische Regionen eine zunehmende Bedeutung. Insbesondere Großstädte und Mega-Citys sehen sich aufgrund infrastruktureller, wirtschaftlicher oder technischer Gegebenheiten wachsenden Problemen bei der Müllentsorgung gegenüber.

Üblicherweise werden Abfälle in Müllsammelbehältern entsorgt und dort so lange gelagert, bis diese von Müllsammelfahrzeugen geleert werden. Die Leerung der Müllsammelbehälter erfolgt dabei in den meisten Fällen gemäß einer statischen Abfuhrsystematik, d.h. in festgelegten Zeitintervallen von beispielsweise einer Woche oder 14 Tagen, unabhängig vom tatsächlichen Füllstand der Müllsammelbehälter und entlang festgelegter Müllsammelrouten.

Da die Füllstände der Müllsammelbehälter zum Zeitpunkt der Leerung typischerweise variieren, kommt es häufig zu einer Leerung lediglich teilweise gefüllter Müllsammelbehälter. Eine solche statische Abfuhrsystematik ist daher zwangsläufig ineffizient und führt darüber hinaus zu einer übermäßigen Belastung der Infrastruktur, da die Anzahl der eingesetzten Müllsammelfahrzeuge und die entsprechenden Sammelrouten für den Fall ausgelegt sein müssen, dass alle zu leerenden Müllsammelbehälter maximal gefüllt sind.

Auf der anderen Seite kann es vorkommen, dass Müllsammelbehälter schon vor der geplanten Leerung ihren Maximalfüllstand erreichen. Häufig wird daraufhin der überschüssige Müll in der Zeit bis zur Leerung neben dem Müllsammelbehälter gelagert, was zu einer Geruchsbelästigung, Verunreinigungen und hygienischen Problemen führen kann. Gleichzeitig wird bei einer unsachgemäßen Lagerung von Müll dessen Entsorgung erschwert und verzögert, was die Effizienz einer statischen Abfallsystematik weiter verringert.

Um die Effizienz der Müllentsorgung zu steigern ist es beispielweise aus der US 2016/0300297 A1 bekannt, Müllsammelbehälter mit Sensoren auszustatten, welche zeitnah Informationen über Inhalt und/oder Zustand der Müllsammelbehälter an ein Serversystem übermitteln. Basierend auf diesen und weiteren optionalen Informationen berechnet das Serversystem eine optimale Sammelroute für die Müllsammelfahrzeuge, welche an die aktuellen oder zu erwartenden Füllstände der Müllsammelbehälter angepasst ist. Ähnliche auf Sensordaten basierende und Routenoptimierte Müllentsorgungslogistiken sind aus der WO 2015/137997 A1 und WO 2015/094140 A1 bekannt.

Die US 2014/172174 A1 offenbart ein gattungsgemäßes Müllentsorgungssystem und ein gattungsgemäßes Müllentsorgungsverfahren. Ein Müllentsorgungssystem, bei dem Sammelrouten auf Grundlage von Sensordaten von Müllsammelbehältern ermittelt werden, ist auch aus der US 2014/278630 A1 bekannt.

Aufgabe der vorliegenden Erfindung ist es nun, intelligente Müllentsorgungssysteme sowie entsprechende Verfahren zur Müllentsorgung derart weiterzuentwickeln, dass die Effizienz und Flexibilität der Müllentsorgung erhöht sowie die Belastung für die Infrastruktur reduziert wird.

Erfindungsgemäß wird diese Aufgabe durch ein Müllentsorgungssystem mit den Merkmalen des Anspruchs 1 sowie durch ein entsprechendes Verfahren zur Müllentsorgung mit den Merkmalen des Anspruchs 9 gelöst.

Demnach umfasst das erfindungsgemäße Müllentsorgungssystem mindestens einen Müllsammelbehälter zur Aufnahme von Müll, wobei der mindestens eine Müllsammelbehälter mit wenigstens einem Sensor zur Erfassung von mindestens einem Zustandsparameter des Müllsammelbehälterinhalts und/oder des Müllsammelbehälterstandortes ausgestattet ist, mindestens ein Müllsammelfahrzeug zur Aufnahme des Inhalts des mindestens einen Müllsammelbehälters und eine Programmsystematik zur Berechnung einer optimalen Route des mindestens einen Müllsammelfahrzeugs zur Sammlung des Inhalts des mindestens einen Müllsammelbehälters.

Die Route kann hierbei hinsichtlich eines bestimmten Parameters oder einer Kombination von Parametern optimiert sein, wie beispielsweise der Routenlänge, der erforderlichen Zeit, der erforderlichen Treibstoffmenge, des Mülltyps, der Erreichbarkeit der Müllsammelbehälter oder anderer wirtschaftlicher Parameter. Insbesondere kann es sich bei der optimalen Route um die schnellste oder kürzeste Route handeln.

Ferner kann es sich bei der Programmsystematik um eine rechnergestützte Datenbankstruktur, eine Rechnerwolke (Cloud), ein Rechnernetz bzw. Serversystem oder ein sonstiges elektronisches System handeln, welches die Berechnung einer optimalen Müllsammelroute ermöglicht, und welches drahtlos ein Signal oder mehrere Signale empfangen und senden kann.

Die Programmsystematik kommuniziert dabei drahtlos mit dem mindestens einen Müllsammelbehälter sowie dem mindestens einen Müllsammelfahrzeug, wobei die Daten des wenigstens einen Sensors des mindestens einen Müllsammelbehälters an die Programmsystematik übermittelt und bei der Berechnung der optimalen Route berücksichtigt werden. Die optimale Route wird anschließend an das mindestens eine Müllsammelfahrzeug übermittelt. Vorzugsweise fließen in die Berechnung der optimalen Route ebenfalls verkehrsbezogene Echtzeitdaten, der aktuelle Füllstand des mindestens einen Müllsammelfahrzeuges, dessen Ort oder dessen Treibstoffstand oder aber eine beliebige Kombination dieser Parameter ein.

Dadurch wird die Effizienz der Müllentsorgung gegenüber einer statischen Abfuhrsystematik wesentlich erhöht, was Zeit, Ressourcen und Kosten spart. Gleichzeitig wird die Infrastruktur innerhalb des Sammelgebiets entlastet, da die Kapazität des mindestens einen Müllsammelfahrzeugs bestmöglich ausgenutzt wird und unnötige Zusatzfahrten vermieden werden. Zusätzlich ist es möglich, bestimmte Ereignisse, die sich auf das Müllaufkommen in einer bestimmten Zeitspanne und/oder in einem bestimmten Gebiet auswirken, wie beispielsweise Straßenfeste, Umzüge oder sonstige Events, in die Planung der Sammelroute des mindestens einen Müllsammelfahrzeuges einzubeziehen.

Die Kommunikation zwischen der Programmsystematik, dem mindestens einen Müllsammelbehälter und dem mindestens einen Müllsammelfahrzeug findet vorzugsweise in periodischen Zeitabständen, besonders vorzugsweise in Echtzeit, statt.

Das erfindungsgemäße Müllentsorgungssystem umfasst weiterhin mindestens einen tragbar oder ortsfest ausgeführten manuellen Aktuator, welcher mindestens einem Müllsammelbehälter zugeordnet ist, und mittels welchem eine Leerung des zugeordneten mindestens einen Müllsammelbehälters innerhalb eines festlegbaren Zeitfensters direkt angefordert werden kann. Bei Betätigung mindestens eines manuellen Aktuators wird drahtlos ein Signal an die Programmsystematik übermittelt. Die Programmsystematik ist eingerichtet, in Reaktion auf das Signal die optimale Sammelroute anzupassen und an das mindestens eine Müllsammelfahrzeug zu übermitteln, dergestalt, dass der mindestens eine Müllsammelbehälter innerhalb des festlegbaren Zeitfensters angefahren wird.

Dabei kann der mindestens eine manuelle Aktuator entweder direkt mit der Programmsystematik kommunizieren oder er übermittelt ein Signal drahtlos an den zugeordneten mindestens einen Müllsammelbehälter, welcher wiederum drahtlos mit der Programmsystematik kommuniziert.

Durch den manuellen mobilen oder ortsfesten Aktuator ist es dem Benutzer möglich, schnell und flexibel auf Änderungen im Müllaufkommen zu reagieren und eine Leerung des zugeordneten mindestens einen Müllsammelbehälters anzufordern, ohne dass es zu einer Überfüllung kommt. Gleichzeitig wird die Flexibilität der Müllentsorgung wesentlich erhöht, da die Optimierung der Sammelroute nicht nur aufgrund automatisch erfasster Sensordaten, sondern ebenfalls aufgrund in Echtzeit erfolgender Leerungs-Anforderungen vorgenommen wird. Dadurch, dass der manuelle Aktuator vorzugsweise tragbar ausgeführt ist, kann eine Leerungs-Anforderung direkt und zeitnah an einem beliebigen Ort, beispielsweise im Haus bzw. innerhalb der zugeordneten Wohn- oder Gewerbeeinheit, vorgenommen werden.

Erfindungsgemäß erfolgt eine Neuberechnung der optimalen Route nicht, wenn eine Leerung des zugeordneten mindestens einen Müllsammelbehälters innerhalb des festlegbaren Zeitfensters bereits geplant ist.

Erfindungsgemäß umfasst das Müllentsorgungssystem ferner mindestens eine Vakuumiervorrichtung zum vakuumdichten Verpacken von Müll und mindestens ein Paketlieferdienstfahrzeug zur Aufnahme von mittels der Vakuumiervorrichtung vakuumdicht verpacktem Müll. Dabei ist die Programmsystematik eingerichtet, ein Signal drahtlos an das mindestens eine Paketlieferdienstfahrzeug oder an eine zweite Programmsystematik zur Routenplanung des mindestens einen Paketlieferdienstfahrzeug zu übermitteln.

Erfindungsgemäß ist mindestens ein Aktuator eingerichtet, bei Betätigung drahtlos ein Signal an die Programmsystematik zu übermitteln, wodurch eine Abholung von mittels der Vakuumiervorrichtung vakuumdicht verpacktem Müll innerhalb eines festlegbaren Zeitfensters durch ein Paketlieferdienstfahrzeug angefordert wird.

Durch das geruchsdichte Vakuumverpacken von Müll ist es möglich, diesen an beliebigen Orten problemlos zu lagern. Insbesondere wird dadurch die Voraussetzung geschaffen, dass der vakuumverpackte Müll von anderen Anbietern, insbesondere Paketlieferdiensten, abgeholt werden kann. Das so ermöglichte Einbinden von Paketlieferdiensten in die Müllentsorgung kann die Effizienz und Flexibilität der Müllentsorgung enorm steigern und bestehende Kapazitäten optimal ausschöpfen, wodurch die Infrastruktur effektiv geschont wird.

Vorteilhafte Ausführungsformen der Erfindung ergeben sich aus den sich an die nebengeordneten unabhängigen Ansprüche anschließenden Unteransprüchen.

Demnach kann der mindestens eine manuelle Aktuator als mobiles Kommunikationsgerät, insbesondere als Smartphone, ausgeführt sein, wodurch auf das Vorhandensein eines zusätzlichen Gerätes verzichtet werden kann. Bei Smartphones kann die Integration besonders einfach mittels einer App erfolgen, die eine graphische Benutzeroberfläche zur einfachen Anforderung der Leerung des zugeordneten mindestens einen Müllsammelbehälters bereitstellt.

Besonders praktischerweise kann die Vakuumiervorrichtung als Küchenmöbel ausgeführt sein, was eine einfache Integrierung in den Haushalt bzw. in eine Wohnoder Gewerbeeinheit erlaubt.

Weiterhin kann vorgesehen sein, dass das Müllentsorgungssystem zusätzlich mindestens eine Schließfachanordnung zur gesicherten Aufnahme und Aufbewahrung von vakuumiertem Müll oder in einer Box verpackte Müll- oder Wertstoff und/oder von einem Paketlieferdienst gelieferten Paketen umfasst. Die Schließfachanordnung kann dabei beispielsweise im Eingangsbereich der dem jeweiligen Müllsammelbehälter zugeordneten Wohn- oder Gewerbeeinheit oder aber auch in deren Außenbereich angeordnet sein.

Dadurch wird ein vereinfachter Austausch von vakuumiertem Müll oder in einer Box verpackte Müll- oder Wertstoff und/oder gelieferten Paketen zwischen Bewohnern bzw. Benutzern und Paketlieferdiensten, unabhängig von der Anwesenheit der jeweiligen Bewohner bzw. Benutzer, erreicht.

Des weiteren können die Schließfächer der Schließfachanordnung vorteilhafterweise jeweils mindestens eine variabel anbringbare Trennwand zur variablen Einrichtung von voneinander getrennten Bereichen innerhalb der Schließfächer besitzen. Damit können Pakete und vakuumierter Müll oder in einer Box verpackte Mülloder Wertstoff in voneinander separierten Bereichen gelagert werden.

Gemäß einer weiteren bevorzugten Ausführungsform besitzt die Schließfachanordnung ein Sicherheitssystem, welches ein Öffnen der einzelnen Schließfächer blockiert, wobei an der Außenseite jedes Schließfachs eine Eingabeeinheit angebracht ist, welche bei korrekter Eingabe eines festlegbaren Sicherheitsschlüssels das entsprechende Schließfach zum Öffnen freigibt und wobei die Schließfächer durch Eingabe des entsprechenden Sicherheitsschlüssels in die jeweilige Eingabeeinheit verriegelt werden können. Bei dem Eingabefeld kann es sich hierbei insbesondere um ein Ziffernfeld und bei dem Sicherheitsschlüssel um eine Zahlenkombination handeln.

Dadurch wird eine gesicherte Aufbewahrung des vakuumierten Mülls oder in einer Box verpackte Müll- oder Wertstoff und/oder der gelieferten Pakete ermöglicht. Dabei ist es beispielsweise denkbar, dass der Sicherheitsschlüssel zwischen Bewohner und Paketlieferdienst ausgetauscht wird, so dass beide unabhängig voneinander auf den Inhalt des jeweiligen Schließfaches zugreifen können.

Gemäß einer weiteren vorteilhaften Ausführungsform ist mittels des wenigstens einen Sensors des mindestens einen Müllsammelbehälters die Position, der aktuelle Füllstand, der Inhaltstyp, das Fassungsvolumen oder der wahrscheinliche Zeitpunkt des Erreichens des Maximalfüllstandes des jeweiligen Müllsammelbehälters erfassbar.

Ferner kann vorgesehen sein, gleichzeitig mehrere Sensoren an dem mindestens einen Müllsammelbehälter anzuordnen, die mehrere der vorgenannten Parameter erfassen und an die Programmsystematik übermitteln. Dadurch wird die Optimierung der Sammelroute verbessert und die Effizienz des Müllentsorgungssystems weiter gesteigert.

Neben dem erfindungsgemäßen Müllentsorgungssystem betrifft die vorliegende Erfindung weiterhin ein Verfahren zur Entsorgung von Müll mittels des erfindungsgemäßen Müllentsorgungssystems.

Das Verfahren umfasst dabei die folgenden Schritte: Erfassung des mindestens einen Zustandsparameters des jeweiligen Müllsammelbehälterinhalts und/oder des Müllsammelbehälters mittels des wenigstens einen Sensors des mindestens einen Müllsammelbehälters, drahtlose Übermittlung der Sensordaten an die Programmsystematik, Berechnung einer optimale Route, insbesondere einer schnellsten, kürzesten oder wirtschaftlich optimalen Route, unter Berücksichtigung der aktuellen übermittelten Sensordaten sowie vorzugsweise ebenfalls verkehrsbasierter Echtzeitdaten durch die Programmsystematik, sowie drahtlose Übermittlung der aktualisierten Routendaten durch die Programmsystematik an das mindestens eine Müllsammelfahrzeug.

Ferner wird durch Betätigung des mindestens einen manuellen Aktuators eine Leerung des zugeordneten mindestens einen Müllsammelbehälters innerhalb eines festlegbaren Zeitfensters direkt angefordert, wobei ein Signal drahtlos an die Programmsystematik übermittelt wird, woraufhin die Route des mindestens einen Müllsammelfahrzeuges von der Programmsystematik derart angepasst wird, dass eine Leerung des dem Aktuator zugeordneten mindestens einen Müllsammelbehälters innerhalb des festlegbaren Zeitfensters durchgeführt wird.

Durch das Zeitfenster, innerhalb dessen die Durchführung einer Leerung garantiert ist, wird ein bequemes und auf den Erzeuger zugeschnittenes Müllentsorgungsverfahren zur Verfügung gestellt. Dadurch kann schon während des Erzeugens von Abfällen deren Entsorgung angestoßen und geplant werden, so dass die Möglichkeit geschaffen wird, eine Überfüllung der zugeordneten Müllsammelbehälter von vorneherein zu vermeiden.

Erfindungsgemäß erfolgt eine Neuberechnung der optimalen Route nicht, wenn eine Leerung des zugeordneten mindestens einen Müllsammelbehälters innerhalb des festlegbaren Zeitfensters bereits geplant ist.

Erfindungsgemäß ist vorgesehen, dass, dass mittels der weiterhin vorhandenen Vakuumiervorrichtung Müll vakuumdicht verpackt wird, so dass dieser ohne das Problem einer Geruchsbelästigung oder Verunreinigung an beliebigen Orten gelagert werden kann.

Erfindungsgemäß ist vorgesehen, dass durch Betätigung des mindestens einen manuellen Aktuators eine Abholung des vakuumverpackten Mülls innerhalb eines festlegbaren Zeitfensters durch ein Paketlieferdienstfahrzeug angefordert wird, wobei ein Signal drahtlos an die Programmsystematik übermittelt wird und wobei die Programmsystematik drahtlos ein Signal an das Paketlieferdienstfahrzeug oder die zweite Programmsystematik übermittelt

Besonders bevorzugt ist es, wenn der vakuumverpackte Müll von einem Paketlieferdienst abgeholt und an eine Entsorgungseinrichtung oder einen Entsorgungsdienst bzw. eine Recyclingeinrichtung oder einen Recyclingdienst übergeben wird. Ganz besonders vorteilhaft ist es hierbei, wenn die zu liefernden Pakete und der abgeholte vakuumierte Müll in voneinander durch mindestens eine variabel anbringbare Trennwand abgetrennten Bereichen des Paketdienstlieferfahrzeuges gelagert werden.

Dadurch, dass Paketlieferdienste derart in die Müllentsorgung eingebunden werden, lassen sich immense bislang ungenutzte Kapazitäten ausnutzen. So ist ein Paketlieferdienstfahrzeug zu Beginn der Liefertour typischerweise voll beladen mit auszuliefernden Paketen. Im Laufe des Tages leert sich der Lagerraum, da die Pakete an die verschiedenen Empfänger zugestellt werden. Dieser über den Tag freiwerdende Raum läßt sich nun dafür nutzen, den vakuumverpackten Müll der belieferten Empfänger und beispielsweise auch anderer Müllerzeuger abzuholen und zu lagern. Die variable Trennwand sorgt dabei für eine strikte Trennung von Paketen und vakuumverpacktem Müll, wobei die Größe der jeweiligen Lagerbereiche laufend angepasst wird. Idealerweise ist das Paketlieferdienstfahrzeug am Ende der Liefertour voll beladen mit vakuumiertem oder in einer Box verpacktem Müll- oder Wertstoff.

Da für das Abholen des vakuumierten Mülls oder in einer Box verpacktem Mülloder Wertstoffs nicht extra Müllsammelfahrzeuge eingesetzt oder von ihren bisherigen Routen abgeleitet werden müssen, sondern vielmehr bereits vor Ort befindliche freie Lager- und Lieferkapazitäten ausgenutzt werden, läßt sich die Ressourcen-, Zeit- und Kosteneffizienz der Müllentsorgung substantiell erhöhen. Gleichzeit wird die Infrastruktur geschont, da auf zusätzliche Fahrten weitgehend verzichtet werden kann.

Darüber hinaus kann vorgesehen sein, dass mittels einer Schließfachanordnung sowohl vakuumierter Müll oder in einer Box verpackter Müll- oder Wertstoff als auch von einem Paketlieferdienst gelieferte Pakete gesichert aufgenommen und aufbewahrt werden, wobei die Schließfächer der Schließfachanordnung vorzugsweise jeweils mindestens eine variabel anbringbare Trennwand zur variablen Einrichtung von voneinander getrennten Bereichen innerhalb der Schließfächer besitzen. Dadurch können gelieferte Pakete und vakuumierter Müll oder in einer Box verpackter Müll- oder Wertstoff unabhängig voneinander und zu beliebigen Zeiten ausgetauscht werden.

Zur Erhöhung der Sicherheit kann ferner vorgesehen sein, dass zum Ablegen oder Abholen von vakuumiertem Müll oder in einer Box verpacktem Müll- oder Wertstoff und/oder Paketen ein festlegbarer Sicherheitsschlüssel, insbesondere eine Zahlenkombination, in eine Eingabeeinheit, insbesondere ein Ziffernfeld, welche jeweils an der Außenseite der Schließfächer der Schließfachanordnung angebracht ist, eingegeben werden muss.

Besonders bevorzugt ist es hierbei, wenn der Sicherheitsschlüssel zwischen dem Benutzer des Schließfachs und dem Paketlieferdienst ausgetauscht wird.

Des weiteren ist vorstellbar, dass das mindestens eine Müllsammelfahrzeug in festgelegten Zeitabständen, vorzugsweise in Echtzeit, Daten drahtlos an die Programmsystematik übermittelt, wobei in Abhängigkeit der Daten die optimale Route von der Programmsystematik angepasst und drahtlos zurück an das mindestens eine Müllsammelfahrzeug übermittelt wird. Insbesondere ist hierbei vorstellbar, dass die von dem Müllsammelfahrzeug übermittelten Daten die aktuelle Fahrzeugposition und/oder den aktuellen Füllstand und/oder den aktuellen Treibstoffstand betreffen.

Weitere Merkmale, Einzelheiten und Vorteile der Erfindung ergeben sich aus den anhand der Figuren erläuterten Ausführungsbeispielen. Es zeigen:
- Figur 1:: eine schematisch dargestellte Beispielroute eines Müllsammelfahrzeuges in einem Beispiel eines nicht erfindungsgemäßen Müllentsorgungssystems, und
- Figur 2:: eine schematische Darstellung der Elemente eines Ausführungsbeispiels des erfindungsgemäßen Müllentsorgungssystems und deren Interaktionen.

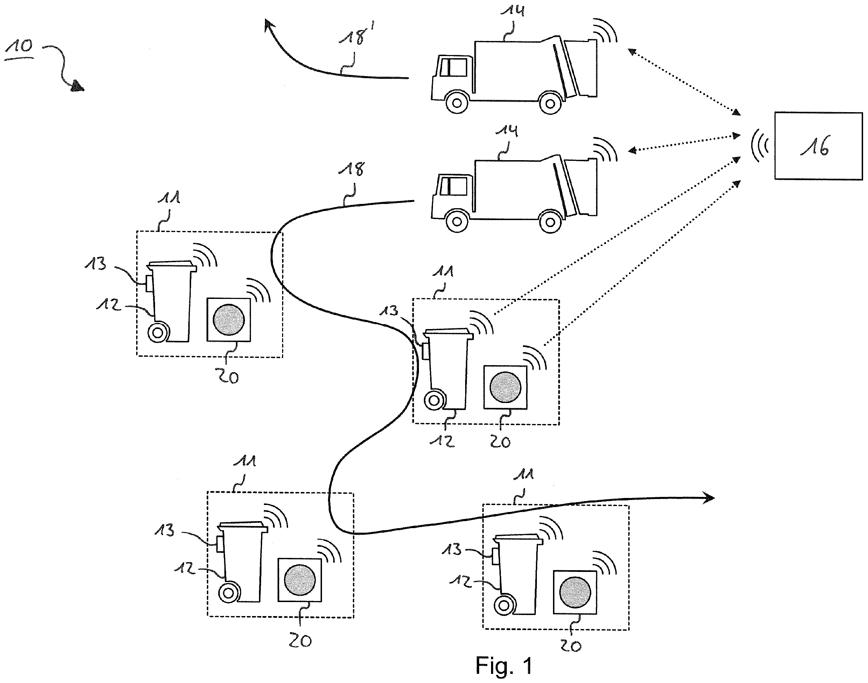

In Figur 1 ist ein Beispiel für ein nicht erfindungsgemäßes Müllentsorgungssystem 10 mit zwei Müllsammelfahrzeugen 14 und deren Sammelrouten 18, 18` (als schwarze Pfeile illustriert) dargestellt. Die Müllsammelfahrzeuge 14 stehen drahtlos mit der Programmsystematik 16 in Kontakt (dargestellt als gestrichelte Doppelpfeile), welche die Daten der zu befahrenden Routen 18, 18` an die Müllsammelfahrzeuge 14 übermittelt.

Des weiteren sind vier verschiedene Wohn- oder Gewerbeeinheiten 11 gezeigt, denen in diesem Ausführungsbeispiel jeweils ein Müllsammelbehälter 12 sowie ein manueller Aktuator 20, welcher als tragbarer Drücker ausgeführt sein kann, zugeordnet ist. Generell können aber selbstverständlich jeder Wohn- oder Gewerbeeinheit 11 mehrere Müllsammelbehälter 12 zugeordnet sein, die dann gleichzeitig von einem Müllsammelfahrzeug 14 angefahren werden. Darüber hinaus können mehrere manuelle Aktuatoren 20 mindestens einem gemeinsamen Müllsammelbehälter 12 innerhalb einer Wohn- oder Gewerbeeinheit 11 zugeordnet sein.

Als Wohn- oder Gewerbeeinheit 11 werden hier generell einzelne oder Zusammenschlüsse mehrerer Wohn- oder Gewerbe-Untereinheiten bezeichnet, welche zusammen ihren erzeugten Müll in einem oder mehreren Müllsammelbehältern 12 entsorgen und welche somit einen einzigen Sammelpunkt der Route 18, 18' eines Müllsammelfahrzeuges 14 darstellen. Beispielsweise kann eine Wohn- oder Gewerbeeinheit 11 ein Wohnhaus mit mehreren Parteien darstellen, die eine gemeinschaftliche Restmülltonne als Müllsammelbehälter 12 nutzen.

Die in Figur 1 gezeigten Müllsammelbehälter 12 weisen jeweils einen Sensor 13 auf, welcher den Füllstand des jeweiligen Müllsammelbehälters 12 erfaßt. Dieser wird in diesem Ausführungsbeispiel zusammen mit der Position des Müllsammelbehälters 12, dessen Inhalttyp und Fassungsvermögen drahtlos an die Programmsystematik 16 übermittelt (dargestellt als gestrichelter Pfeil). Diese Daten werden regelmäßig in festen Zeitabständen an die Programmsystematik 16 übermittelt. Alternativ kann die Übermittlung jedoch auch kontinuierlich erfolgen.

Aus den regelmäßig übermittelten Daten aller Müllsammelbehälter 12 errechnet die Programmsystematik 16 für jeden Müllsammelbehälter 12 den erwarteten Zeitpunkt des Erreichens des maximalen Füllstandes. Alternativ kann dies auch schon durch einen Schaltkreis am Müllsammelbehälter 12 selbst vorgenommen und zusammen mit den anderen Daten direkt an die Programmsystematik 16 übermittelt werden. Darüber hinaus übermitteln die Müllsammelfahrzeuge 14 in regelmäßigen Zeitabständen (oder alternativ auch kontinuierlich) ihren aktuellen Füllstand, Treibstoffstand sowie ihre aktuelle Position.

Auf der Grundlage aller verfügbarer Daten der Müllsammelbehälter 12 und der Müllsammelfahrzeuge 14 sowie aktueller und prognostizierter Wetter- und Verkehrsdaten errechnet die Programmsystematik 16 für jedes Müllsammelfahrzeug 14 eine optimale Route 18, 18`. Dabei kann es sich beispielsweise um die schnellste oder aber um die kürzeste Route 18, 18' handeln. Jede Wohn- oder Gewerbeeinheit 11 stellt hierbei einen Sammelpunkt entlang der Route 18 dar, an dem das Müllsammelfahrzeug 14 eine Leerung des zugeordneten Müllsammelbehälters 12 durchführt.

Gleichzeitig ist jedem in Figur 1 gezeigten Müllsammelbehälter 12 ein manueller Aktuator 20 zugeordnet. Bei Betätigung übermittelt dieser drahtlos ein Signal an die Programmsystematik 16 und fordert dadurch eine Leerung des zugeordneten Müllsammelbehälters 12 innerhalb eines festlegbaren Zeitfensters an. Das von einem manuellen Aktuator 20 übermittelte Signal initiiert wiederum eine Neuberechnung der optimalen Route 18 dergestalt, dass die zugehörige Wohn- oder Gewerbeeinheit 11 innerhalb des festlegbaren Zeitfensters von einem Müllsammelfahrzeug 14 angefahren wird. Falls eine Leerung des zugeordneten Müllsammelbehälters innerhalb des festlegbaren Zeitfensters bereits zuvor ohnehin geplant war, ist keine Neuberechnung der Route 18 erforderlich.

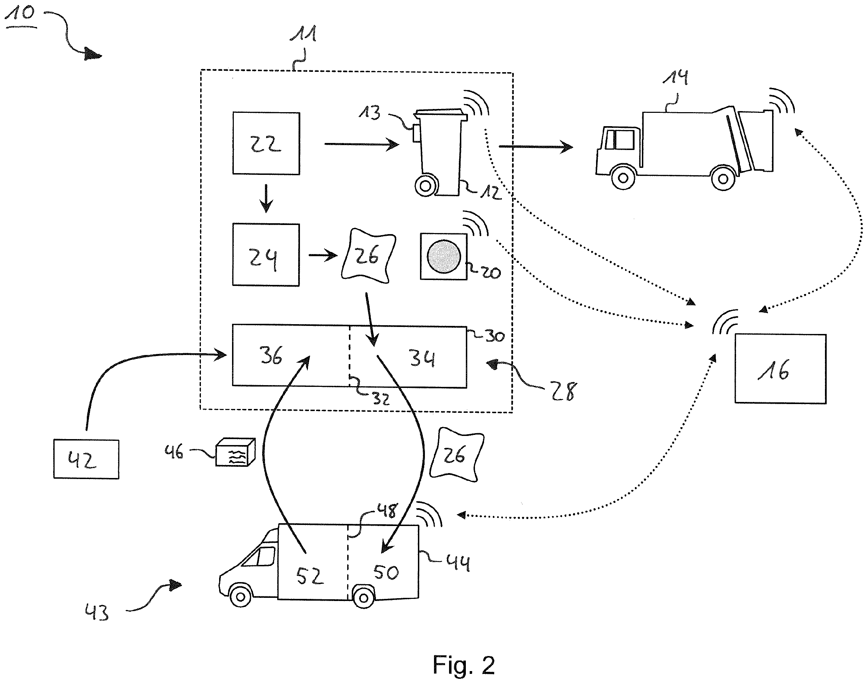

In Figur 2 ist ein Ausführungsbeispiel des erfindungsgemäßen Müllentsorgungssystems 10 dargestellt. Es ist eine einzelne Wohn- oder Gewerbeeinheit 11 gezeigt sowie zwei verschiedene Möglichkeiten, wie der dort erzeugte Müll 22 entsorgt werden kann.

Zum einen kann der Müll 22 in einem der Wohn- oder Gewerbeeinheit 11 zugeordneter Müllsammelbehälter 12 entsorgt werden. Wie bereits in dem in Figur 1 dargestellten Beispiel erläutert wird die Wohn- oder Gewerbeeinheit 11 von einem Müllsammelfahrzeug 14 angefahren, welches sich entlang einer von der Programmsystematik 16 berechneten optimalen Route 18 bewegt.

Zusätzlich befindet sich in der Wohn- oder Gewerbeeinheit 11 eine Vakuumiervorrichtung 24, mit der Müll, insbesondere wenn es sich dabei um gewöhnlichen Hausmüll oder kleinteiligen Müll handelt, vakuum- und geruchsdicht verpackt werden kann. Der auf diesem Wege vakuumierte Müll 26 kann nun von einem Paketlieferdienst 43 abgeholt und entsorgt werden.

Dazu ist in diesem Ausführungsbeispiel eine Schließfachanordnung 28 mit einem Schließfach 30 vorgesehen, welches zwei durch eine variable Trennwand 32 separierte Lagerbereiche 34 und 36 für vakuumierten Müll oder in einer Box verpackten Müll- oder Wertstoff 26 und gelieferte Pakete 46 aufweist. Bei Wohn- oder Gewerbeeinheiten 11 mit mehreren Untereinheiten kann die Schließfachanordnung 28 jeweils ein eigenes Schließfach 30 pro Untereinheit aufweisen. Die Schließfachanordnung 28 kann sich darüber hinaus im Eingangsbereich, vorzugsweise in der Nähe der Briefkasteneinheiten, der Wohn- oder Gewerbeeinheit 11 befinden. Das Schließfach 30 ist ferner mit einem Sicherheitssystem 38 ausgestattet, welches ein unbefugtes Öffnen des Schließfachs 30 blockiert und somit verhindert. Dazu ist an der Außenseite des Schließfachs 30 ein Ziffernfeld 40 vorgesehen, in welches ein Zahlencode 42 eingegeben werden kann. Bei Korrekter Eingabe des Zahlencodes 42 gibt das Sicherheitssystem 38 das Schließfach 30 zum Öffnen frei oder verriegelt das Schließfach 30 wieder bei erneuter Eingabe.

In dem Schließfach 30 können unabhängig und getrennt voneinander vakuumierter Müll 26 und gelieferte Pakete 46 gelagert werden. Bei Lieferung eines Pakets 46 durch einen Paketlieferdienst 43 kann dieser das gelieferte Paket 46, beispielsweise bei Abwesenheit der Bewohner bzw. Benutzer der Wohn- oder Gewerbeeinheit 11, in das dafür vorgesehene Fach 36 des Schließfachs 30 legen. Dazu hat der Paketlieferdienst 43 Zugriff auf den Zahlencode 42 des Sicherheitssystems 38, oder der Zahlencode 42 wird auf elektronischem oder anderweitigem Wege zwischen Bewohnern bzw. Benutzern der Wohn- oder Gewerbeeinheit 11 und dem Paketlieferdienst 43 ausgetauscht. Wurde nun zuvor vakuumierter Müll oder in einer Box verpackter Müll- oder Wertstoff 26 in dem dafür vorgesehen Fach 34 des Schließfachs 30 abgelegt, kann der Paketdienst 43 den vakuumierten Müll oder in einer Box verpackten Müll- oder Wertstoff 26 abholen und in seinem Paketlieferdienstfahrzeug 44 lagern.

Um den abgeholten vakuumierten Müll oder in einer Box verpackten Müll- oder Wertstoff 26 getrennt von den noch zu liefernden Paketen 46 zu lagern, weist das Paketlieferdienstfahrzeug 44 eine variable Trennwand 48 auf, welche sich an den aktuellen Platzbedarf der noch zu liefernden Pakete 46 anpassen läßt. So ist das Paketlieferdienstfahrzeug 44 zu Beginn der Liefertour vollständig oder fast vollständig mit Paketen 46 gefüllt, so dass der für die Pakete vorgesehene Lagerbereich 52 einen entsprechenden großen Raum einnehmen muss. Im Laufe der Liefertour werden die verschiedenen Pakete schrittweise an verschiedene Empfänger zugestellt, so dass nach und nach der von den noch zu liefernden Paketen 46 beanspruchte Platz 52 im Paketlieferdienstfahrzeug 44 geringer wird. Durch eine entsprechende Verstellung der variablen Trennwand 48 läßt sich dadurch gleichermaßen der für die Lagerung von abgeholtem vakuumiertem Müll oder in einer Box verpackten Müll- oder Wertstoff 26 gedachte Raum 50 nach und nach vergrößern. Am Ende der Liefertour kann es also vorkommen, dass das Paketlieferdienstfahrzeug 44 fast vollständig mit abgeholtem vakuumiertem Müll oder in einer Box verpacktem Müll- oder Wertstoff 26 gefüllt ist. Dieser kann anschließend vom Paketlieferdienst 43 beispielsweise an eine Entsorgungseinrichtung oder einen Entsorgungsdienst bzw. eine Recyclingeinrichtung oder einen Recyclingdienst übergeben werden.

Um die Abholung von vakuumiertem Müll oder in einer Box verpacktem Müll- oder Wertstoff durch Paketlieferdienste 43 zu koordinieren und zu planen, kommunizieren die Paketlieferdienstfahrzeuge 44 drahtlos mit der Programmsystematik 16 und übermitteln an diese beispielsweise deren aktuelle Position sowie den aktuellen Füllstand mit abgeholtem vakuumiertem Müll oder in einer Box verpacktem Mülloder Wertstoff 26.

Die Programmsystematik 16 empfängt Signale von den manuellen Aktuatoren 20, welche beispielsweise als tragbare Drücker ausgeführt sein können. Dafür kann es vorgesehen sein, unterschiedliche tragbare Drücker oder einen einzigen tragbaren Drücker mit verschiedenen Knöpfen für die Leerungs-Anforderung für Müllsammelbehälter 12 einerseits und vakuumierten Müll oder in einer Box verpackten Mülloder Wertstoff 26 andererseits zu verwenden. Im Falle einer Smartphone-App und entsprechend einem Smartphone als manuellem Aktuator 20 ist die Auswahl der unterschiedlichen Abholungsanforderungen besonders einfach zu realisieren.

Für den Fall, dass mittels eines manuellen Aktuators 20 eine Abholung von vakuumiertem Müll oder in einer Box verpacktem Müll- oder Wertstoff 26 angefordert wird, übermittelt die Programmsystematik 16 ein oder mehrere Signale drahtlos an ein oder mehrere Paketlieferdienstfahrzeuge 44. Hierbei ist es auch vorstellbar, dass lediglich Ort und Zeitpunkt der Anforderung zusammen mit dem garantierten Zeitfenster der Abholung an das für die Belieferung der entsprechenden Wohn- oder Gewerbeeinheit 11 zuständige Paketlieferdienstfahrzeug 44 übermittelt werden, welches daraufhin eine Abholung durchführt. Ebenfalls ist denkbar, dass die Programmsystematik 16 diese oder andere Informationen an eine andere Programmsystematik übermittelt, welche für die Routenplanung der verschiedenen Paketlieferdienstfahrzeuge 44 zuständig ist und welche daraufhin die Lieferrouten der Paketlieferdienstfahrzeuge 44 derart anpasst, dass die geforderte Abholung des vakuumierten Mülls oder des in einer Box verpackten Müll- oder Wertstoffes 26 innerhalb des festlegbaren Zeitfensters durchgeführt wird. Alternativ kann auch vorgesehen sein, dass die Programmsystematik 16 neben der Routenplanung der Müllsammelfahrzeuge 14 ebenfalls die Routenplanung der Paketlieferdienstfahrzeuge 44 übernimmt und so die unterschiedlichen Abhol- und Leerungswünsche koordiniert. Ferner kann es erforderlich sein, dass vakuumierter Müll oder in einer Box verpackte Müll- oder Wertstoff nicht lediglich zusammen mit der Lieferung von Paketen 46 sondern eigenständig von einem Paketlieferdienstfahrzeug 44 abgeholt wird, auch wenn gerade kein Paket 46 geliefert wird.

Durch die Einbindung von Paketlieferdiensten 43 in die Müllentsorgung lassen sich bislang ungenutzte Kapazitäten von unzähligen Paketlieferdienstfahrzeugen 44 ausschöpfen, welche Tag für Tag innerhalb der Sammelgebiete der Müllsammelfahrzeuge 14 unterwegs sind. Dadurch kann eine effiziente, flexible und auf den Müllerzeuger individuell zugeschnittene Müllentsorgung erreicht werden, welche gleichzeitig Ressourcen und Kosten einspart und die Infrastruktur schont.

### Bezugszeichenliste

- 10: Müllentsorgungssystem
- 11: Wohn- oder Gewerbeeinheit
- 12: Müllsammelbehälter
- 13: Sensor
- 14: Müllsammelfahrzeug
- 16: Programmsystematik
- 18: Optimale Route
- 18': Optimale Route
- 20: Manueller Aktuator
- 22: Müll
- 24: Vakuumiervorrichtung
- 26: Vakuumierter Müll oder in einer Box verpackter Müll- oder Wertstoff
- 28: Schließfachanordnung
- 30: Schließfach
- 32: Variable Trennwand
- 34: Schließfach-Lagerbereich für vakuumierten Müll oder in einer Box verpackten Müll- oder Wertstoff
- 36: Schließfach-Lagerbereich für Pakete
- 38: Sicherheitssystem
- 40: Eingabeeinheit
- 42: Sicherheitsschlüssel
- 43: Paketlieferdienst
- 44: Paketlieferdienstfahrzeug
- 46: Paket
- 48: Variable Trennwand
- 50: Paketlieferdienstfahrzeug-Lagerbereich für vakuumierten Müll
- 52: Paketlieferdienstfahrzeug-Lagerbereich für Pakete

## Patentansprüche

1. Müllentsorgungssystem (10), umfassend:
mindestens einen Müllsammelbehälter (12) zur Aufnahme von Müll,
wobei der mindestens eine Müllsammelbehälter (12) mit wenigstens einem Sensor (13) zur Erfassung von mindestens einem Zustandsparameter des Müllsammelbehälterinhalts und/oder des Müllsammelbehälters (12) ausgestattet ist,
mindestens einen manuellen mobilen oder ortsfesten Aktuator (20), welcher mindestens einem Müllsammelbehälter (12) zugeordnet und tragbar oder ortsfest ausgeführt ist,
mindestens ein Müllsammelfahrzeug (14) zur Aufnahme des Inhalts des mindestens einen Müllsammelbehälters (12), und
eine Programmsystematik (16) zur Berechnung einer optimalen Route (18, 18'), insbesondere einer wirtschaftlich optimalen oder einer schnellsten Route, des mindestens einen Müllsammelfahrzeugs (14) zur Sammlung des Inhalts des mindestens einen Müllsammelbehälters (12),
wobei die Programmsystematik (16) drahtlos mit dem mindestens einen Müllsammelbehälter (12) sowie dem mindestens einen Müllsammelfahrzeug (14) kommuniziert, und
wobei die Daten des wenigstens einen Sensors (13) des mindestens einen Müllsammelbehälters (12) sowie vorzugsweise ebenfalls verkehrsbezogene Echtzeitdaten bei der Berechnung der optimalen Route (18, 18') berücksichtigt werden,
**dadurch gekennzeichnet,**
**dass** das Müllentsorgungssystem (10) ferner mindestens eine Vakuumiervorrichtung (24) zum vakuumdichten Verpacken von Müll (22) und mindestens ein Paketlieferdienstfahrzeug (44) zur Aufnahme von mittels der Vakuumiervorrichtung (24) vakuumdicht verpacktem Müll (22) umfasst,
**dass** die Programmsystematik (16) eingerichtet ist, ein Signal drahtlos an das mindestens eine Paketlieferdienstfahrzeug (44) oder an eine zweite Programmsystematik zur Routenplanung des mindestens einen Paketlieferdienstfahrzeug (44) zu übermitteln,
**dass** mindestens ein Aktuator (20) eingerichtet ist, bei Betätigung drahtlos ein Signal an die Programmsystematik (16) zu übermitteln, wodurch eine Leerung des zugeordneten mindestens einen Müllsammelbehälters (12) innerhalb eines festlegbaren Zeitfensters direkt angefordert wird,
**dass** die Programmsystematik eingerichtet ist, in Reaktion auf das Signal die optimale Route (18, 18') anzupassen und an das mindestens eine Müllsammelfahrzeug (14) zu übermitteln, dergestalt, dass der mindestens eine Müllsammelbehälter (12) innerhalb des festlegbaren Zeitfensters angefahren wird, wobei eine Neuberechnung der optimalen Route (18, 18') nicht erfolgt, wenn eine Leerung des zugeordneten mindestens einen Müllsammelbehälters (12) innerhalb des festlegbaren Zeitfensters bereits geplant ist, und
**dass** mindestens ein Aktuator (20) eingerichtet ist, bei Betätigung drahtlos ein Signal an die Programmsystematik (16) zu übermitteln, wodurch eine Abholung von mittels der Vakuumiervorrichtung (24) vakuumdicht verpacktem Müll (22) innerhalb eines festlegbaren Zeitfensters durch ein Paketlieferdienstfahrzeug (44) angefordert wird.

2. Müllentsorgungssystem (10) gemäß Anspruch 1, **dadurch gekennzeichnet, dass** der mindestens eine manuelle Aktuator (20) als mobiles Kommunikationsgerät ausgeführt ist.

3. Müllentsorgungssystem (10) gemäß Anspruch 1 oder 2, **dadurch gekennzeichnet, dass** das Müllentsorgungssystem (10) weiterhin mindestens eine Schließfachanordnung (28) zur gesicherten Aufnahme und Aufbewahrung von vakuumiertem oder verpacktem Müll (26) oder Wertstoff und/oder von einem Paketlieferdienst gelieferten Paketen umfasst.

4. Müllentsorgungssystem (10) gemäß Anspruch 3, **dadurch gekennzeichnet, dass** die Schließfächer (30) der Schließfachanordnung (28) jeweils mindestens eine variabel anbringbare Trennwand (32) zur variablen Einrichtung von voneinander getrennten Bereichen (34, 36) innerhalb der Schließfächer (30) besitzen.

5. Müllentsorgungssystem (10) gemäß einem der Ansprüche 3 oder 4, **dadurch gekennzeichnet, dass** die Schließfachanordnung (28) ein Sicherheitssystem (38) besitzt, welches ein Öffnen der einzelnen Schließfächer (30) blockiert, wobei an der Außenseite jedes Schließfachs (30) eine Eingabeeinheit (40), insbesondere ein Ziffernfeld, angebracht ist, welche bei korrekter Eingabe eines festlegbaren Sicherheitsschlüssels (42), insbesondere einer Zahlenkombination, das entsprechende Schließfach (30) zum Öffnen freigibt und wobei die Schließfächer (30) durch Eingabe des entsprechenden Sicherheitsschlüssels (42) in die jeweilige Eingabeeinheit (40) verriegelt werden können.

6. Müllentsorgungssystem (10) gemäß einem der einem der Ansprüche 3 bis 5, **dadurch gekennzeichnet, dass** die Schließfachanordnung (28) innerhalb des Eingangsbereichs der dem jeweiligen mindestens einen Müllsammelbehälter (12) zugeordneten Wohn- oder Gewerbeeinheit (11) angeordnet ist.

7. Müllentsorgungssystem (10) gemäß einem der vorhergehenden Ansprüche, **dadurch gekennzeichnet, dass** mittels des wenigstens einen Sensors (13) des mindestens einen Müllsammelbehälters (12) die Position, der aktuelle Füllstand, der Inhaltstyp, das Fassungsvolumen oder der wahrscheinliche Zeitpunkt des Erreichens des Maximalfüllstandes des jeweiligen Müllsammelbehälters (12) erfassbar ist.

8. Verfahren zur Entsorgung von Müll (22) mittels eines Müllentsorgungssystems (10) gemäß Anspruch 1, wobei das Verfahren folgende Schritte umfasst:
Erfassung des mindestens einen Zustandsparameters des jeweiligen Müllsammelbehälterinhalts und/oder des Müllsammelbehälters (12) mittels des wenigstens einen Sensors (13) des mindestens einen Müllsammelbehälters (12), drahtlose Übermittlung der Sensordaten an die Programmsystematik (16), Berechnung einer optimale Route (18, 18'), insbesondere einer schnellsten, kürzesten oder wirtschaftlich optimalen Route, unter Berücksichtigung der aktuellen übermittelten Sensordaten sowie vorzugsweise ebenfalls verkehrsbasierter Echtzeitdaten durch die Programmsystematik (16), sowie drahtlose Übermittlung der aktualisierten Routendaten durch die Programmsystematik (16) an das mindestens eine Müllsammelfahrzeug (14),
**dadurch gekennzeichnet,**
**dass** durch Betätigung des mindestens einen manuellen Aktuators (20) eine Leerung des zugeordneten mindestens einen Müllsammelbehälters (12) innerhalb eines festlegbaren Zeitfensters direkt angefordert wird, wobei ein Signal drahtlos an die Programmsystematik (16) übermittelt wird, woraufhin die Route (18, 18') des mindestens einen Müllsammelfahrzeuges (14) derart angepasst wird, dass eine Leerung des dem Aktuator (20) zugeordneten mindestens einen Müllsammelbehälters (12) innerhalb des festlegbaren Zeitfensters durchgeführt wird, wobei eine Neuberechnung der optimalen Route (18, 18') nicht erfolgt, wenn eine Leerung des zugeordneten mindestens einen Müllsammelbehälters (12) innerhalb des festlegbaren Zeitfensters bereits geplant ist,
und **dass** mittels der Vakuumiervorrichtung (24) Müll (22) vakuumdicht verpackt wird, wobei durch Betätigung des mindestens einen manuellen Aktuators (20) eine Abholung des vakuumverpackten Mülls (22) innerhalb eines festlegbaren Zeitfensters durch ein Paketlieferdienstfahrzeug (44) angefordert wird, wobei ein Signal drahtlos an die Programmsystematik (16) übermittelt wird und wobei die Programmsystematik (16) drahtlos ein Signal an das Paketlieferdienstfahrzeug (44) oder die zweite Programmsystematik übermittelt.

9. Verfahren gemäß Anspruch 8, **dadurch gekennzeichnet, dass** der vakuumverpackte Müll oder in einer Box verpackter Müll- oder Wertstoff (26) von einem Paketlieferdienst (43) abgeholt und an eine Entsorgungseinrichtung oder einen Entsorgungsdienst übergeben wird, wobei die zu liefernden Pakete (46) und der abgeholte vakuumierte Müll oder in einer Box verpackte Müll- oder Wertstoff (26) in besonders vorteilhafter Weise in voneinander durch mindestens eine variabel anbringbare Trennwand (48) abgetrennten Bereichen (50, 52) des Paketdienstlieferfahrzeuges (44) gelagert werden.

10. Verfahren gemäß Anspruch 9 **dadurch gekennzeichnet, dass** mittels einer Schließfachanordnung (28) sowohl vakuumierter Müll oder in einer Box verpackte Müll- oder Wertstoff (26) als auch von einem Paketlieferdienst (43) gelieferte Pakete (46) gesichert aufgenommen und aufbewahrt werden und dadurch zu beliebigen Zeiten ausgetauscht werden können, wobei die Schließfächer (30) der Schließfachanordnung (28) vorzugsweise jeweils mindestens eine variabel anbringbare Trennwand (32) zur variablen Einrichtung von voneinander getrennten Bereichen (34, 36) innerhalb der Schließfächer (30) besitzen.

11. Verfahren gemäß Anspruch 10, **dadurch gekennzeichnet, dass** zum Ablegen oder Abholen von vakuumiertem Müll (26) und/oder Paketen (46) ein festlegbarer Sicherheitsschlüssel (42), insbesondere eine Zahlenkombination, in eine Eingabeeinheit (40), insbesondere ein Ziffernfeld, welche an der Außenseite der Schließfächer (30) der Schließfachanordnung (28) angebracht ist, eingegeben werden muss, wobei vorzugsweise der Sicherheitsschlüssel (42) zwischen dem Benutzer des Schließfachs (30) und dem Paketlieferdienst (43) ausgetauscht wird.

12. Verfahren gemäß einem der Ansprüche 9 bis 11, **dadurch gekennzeichnet, dass** durch Betätigung des mindestens einen manuellen Aktuators (20) eine Abholung von vakuumiertem Müll oder in einer Box verpackte Müll- oder Wertstoff (26), vorzugsweise innerhalb eines definierbaren Zeitfensters, durch einen Paketlieferdienst (43) angefordert wird.

13. Verfahren gemäß einem der Ansprüche 8-12, **dadurch gekennzeichnet, dass** das mindestens eine Müllsammelfahrzeug (14) in festgelegten Intervallabständen, vorzugsweise in Echtzeit, Daten drahtlos an die Programmsystematik (16) übermittelt, wobei in Abhängigkeit der Daten die optimale Route (18, 18') von der Programmsystematik (16) angepasst und drahtlos zurück an das mindestens eine Müllsammelfahrzeug (14) übermittelt wird.

14. Verfahren gemäß Anspruch 13, **dadurch gekennzeichnet, dass** die vom Müllsammelfahrzeug (14) übermittelten Daten die aktuelle Fahrzeugposition und/oder den aktuellen Füllstand und/oder den aktuellen Treibstoffstand betreffen.

## Claims

1. Waste disposal system (10), comprising:
at least one waste collection container (12) for receiving waste, wherein the at least one waste collection container (12) is equipped with at least one sensor (13) for detecting at least one status parameter of the waste collection container contents and/or of the waste collection container (12),
at least one manual mobile or stationary actuator (20), which is assigned to at least one waste collection container (12) and is implemented in a portable or stationary manner,
at least one waste collection vehicle (14) for receiving the contents of the at least one waste collection container (12), and
a program system (16) for calculating an optimal route (18, 18'), in particular an economically optimal or a fastest route, of the at least one waste collection vehicle (14) for collecting the contents of the at least one waste collection container (12),
wherein the program system (16) communicates wirelessly with the at least one waste collection container (12) and the at least one waste collection vehicle (14), and
wherein the data of the at least one sensor (13) of the at least one waste collection container (12) and preferably likewise traffic-related real time data are taken into account when calculating the optimal route (18, 18'),
**characterised in that**
the waste disposal system (10) further comprises at least one vacuum-packing device (24) for the vacuum-tight packing of waste (22) and at least one parcel delivery service vehicle (44) for receiving waste (22) packed vacuum-tight by means of the vacuum-packing device (24),
the program system (16) is configured to transmit a signal wirelessly to the at least one parcel delivery service vehicle (44) or to a second program system for route planning of the at least one parcel delivery service vehicle (44), at least one actuator (20) is configured to transmit wirelessly a signal to the program system (16) when operated, whereby emptying of the at least one assigned waste collection container (12) within a determinable time window is requested directly,
the program system is configured to adapt the optimal route (18, 18') in reaction to the signal and to transmit it to the at least one waste collection vehicle (14) in such a way that the at least one waste collection container (12) is called at within the determinable time window, wherein recalculation of the optimal route (18, 18') does not take place if emptying of the at least one assigned waste collection container (12) is already planned within the determinable time window, and
at least one actuator (20) is configured to transmit wirelessly a signal to the program system (16) when operated, whereby a pick-up of waste (22) packed vacuum-tight by means of the vacuum-packing device (24) by a parcel delivery service vehicle (44) within a determinable time window is requested.

2. Waste disposal system (10) according to claim 1, **characterised in that** the at least one manual actuator (20) is implemented as a mobile communications device.

3. Waste disposal system (10) according to claim 1 or 2, **characterised in that** the waste disposal system (10) furthermore comprises at least one locker arrangement (28) for the secure take-up and storage of vacuum-packed or packed waste (26) or recyclable material and/or parcels delivered by a parcel delivery service.

4. Waste disposal system (10) according to claim 3, **characterised in that** the lockers (30) of the locker arrangement (28) each have at least one variably affixable partition wall (32) for the variable configuration of areas (34, 36) separated from one another inside the lockers (30).

5. Waste disposal system (10) according to one of claims 3 or 4, **characterised in that** the locker arrangement (28) has a security system (38), which blocks opening of the individual lockers (30), wherein mounted on the outside of each locker (30) is an input unit (40), in particular a number pad, which upon correct entry of a determinable security key (42), in particular a number combination, releases the corresponding locker (30) for opening and wherein the lockers (30) can be locked by entry of the corresponding security key (42) into the respective input unit (40).

6. Waste disposal system (10) according to one of claims 3 to 5, **characterised in that** the locker arrangement (28) is arranged inside the entrance area of the residential or commercial unit (11) associated with the respective at least one waste collection container (12).

7. Waste disposal system (10) according to any one of the preceding claims, **characterised in that** by means of the at least one sensor (13) of the at least one waste collection container (12), the position, the current filling level, the content type, the capacity or the probable point in time of attaining the maximum filling level of the respective waste collection container (12) can be detected.

8. Method for disposing of waste (22) by means of a waste disposal system (10) according to claim 1, wherein the method comprises the following steps:
detection of at least one status parameter of the respective waste collection container contents and/or of the waste collection container (12) by means of the at least one sensor (13) of the at least one waste collection container (12), wireless transmission of the sensor data to the program system (16),
calculation of an optimal route (18, 18'), in particular a fastest, shortest or economically optimal route, with account being taken of the current transmitted sensor data and preferably likewise traffic-based real time data by the program system (16), and wireless transmission of the updated route data by the program system (16) to the at least one waste collection vehicle (14),
**characterised in that**
by operation of the at least one manual actuator (20), emptying of the at least one assigned waste collection container (12) within a determinable time window is requested directly, wherein a signal is transmitted wirelessly to the program system (16), whereupon the route (18, 18') of the at least one waste collection vehicle (14) is adapted such that emptying of the at least one waste collection container (12) associated with the actuator (20) is carried out within the determinable time window, wherein recalculation of the optimal route (18, 18') does not take place if emptying of the at least one assigned waste collection container (12) is already planned within the determinable time window,
and that waste (22) is packed vacuum-tight by means of the vacuum-packing device (24), wherein by operation of the at least one manual actuator (20) a pick-up of the vacuum-packed waste (22) within a determinable time window by a parcel delivery service vehicle (44) is requested, wherein a signal is transmitted wirelessly to the program system (16) and wherein the program system (16) transmits a signal wirelessly to the parcel delivery service vehicle (44) or to the second program system.

9. Method according to claim 8, **characterised in that** the vacuum-packed waste or waste or recyclable material (26) packed in a box is picked up by a parcel delivery service (43) and transferred to a disposal facility or a disposal service, wherein the parcels (46) to be delivered and the picked-up vacuum-packed waste or waste or recyclable material (26) packed in a box are stored in a particularly advantageous manner in areas (50, 52) of the parcel delivery service vehicle (44) that are separated from one another by at least one variably affixable partition wall (48).

10. Method according to claim 9, **characterised in that** by means of a locker arrangement (28), both vacuum-packed waste or waste or recyclable material (26) packed in a box and parcels (46) delivered by a parcel delivery service (43) are taken up and stored securely and can thereby be exchanged at any time, wherein the lockers (30) of the locker arrangement (28) preferably each have at least one variably affixable partition wall (32) for variable configuration of areas (34, 36) separated from one another within the lockers (30).

11. Method according to claim 10, **characterised in that** to deposit or pick up vacuum-packed waste (26) and/or parcels (46), a determinable security key (42), in particular a number combination, must be entered into an input unit (40), in particular a number pad, which is mounted on the outside of the lockers (30) of the locker arrangement (28), wherein preferably the security key (42) is exchanged between the user of the locker (30) and the parcel delivery service (43).

12. Method according to any one of claims 9 to 11, **characterised in that** by operation of the at least one manual actuator (20), a pick-up of vacuum-packed waste or of waste or recyclable material (26) packed in a box by a parcel delivery service (43), preferably within a determinable time window, is requested.

13. Method according to any one of claims 8-12, **characterised in that** the at least one waste collection vehicle (14) transmits data at set intervals, preferably in real time, wirelessly to the program system (16), wherein depending on the data, the optimal route (18, 18') is adapted by the program system (16) and transmitted wirelessly back to the at least one waste collection vehicle (14).

14. Method according to claim 13, **characterised in that** the data transmitted by the waste collection vehicle (14) relates to the current vehicle position and/or the current filling level and/or the current fuel level.

## Revendications

1. Système d'évacuation des déchets (10), comprenant :
au moins un récipient de collecte de déchets (12) destiné à la réception de déchets, l'au moins un récipient de collecte de déchets (12) étant équipé d'au moins un capteur (13) destiné à la détection d'au moins un paramètre d'état du contenu du récipient de collecte de déchets et/ou du récipient de collecte de déchets (12),
au moins un actionneur (20) manuel mobile ou fixe, qui est associé à au moins un récipient de collecte de déchets (12) et réalisé de manière portative ou fixe, au moins un véhicule de collecte de déchets (14) destiné à la réception du contenu de l'au moins un récipient de collecte de déchets (12) et
une systématique de programme (16) destinée au calcul d'un itinéraire (18, 18') optimal, en particulier un itinéraire économiquement optimal ou le plus rapide, de l'au moins un véhicule de collecte de déchets (14) pour la collecte du contenu de l'au moins un récipient de collecte de déchets (12),
la systématique de programme (16) communiquant sans fil avec l'au moins un récipient de collecte de déchets (12) ainsi que l'au moins un véhicule de collecte de déchets (14), et
les données de l'au moins un capteur (13) de l'au moins un récipient de collecte de déchets (12) ainsi que, de préférence, également des données en temps réel relatives à la circulation, étant prises en compte lors du calcul de l'itinéraire (18, 18') optimal,
**caractérisé en ce que**
le système d'évacuation des déchets (10) comprend en outre au moins un dispositif de mise sous vide (24) destiné à l'emballage étanche au vide de déchets (22) et au moins un véhicule de service de livraison de colis (44) destiné à la réception de déchets (22) emballés de manière étanche au vide au moyen du dispositif de mise sous vide (24),
la systématique de programme (16) est configurée pour transmettre sans fil un signal à l'au moins un véhicule de service de livraison de colis (44) ou à une seconde systématique de programme destinée à la planification d'itinéraire de l'au moins un véhicule de service de livraison de colis (44),
au moins un actionneur (20) est configuré pour, lors de l'actionnement, transmettre sans fil un signal à la systématique de programme (16),
moyennant quoi un vidage de l'au moins un récipient de collecte de déchets (12) associé pendant une fenêtre temporelle définissable est directement demandé,
la systématique de programme est configurée pour, en réaction au signal, adapter l'itinéraire (18, 18') optimal et le transmettre à l'au moins un véhicule de collecte de déchets (14), de telle sorte que l'au moins un récipient de collecte de déchets (12) est desservi pendant la fenêtre temporelle définissable, un nouveau calcul de l'itinéraire (18, 18') optimal n'ayant pas lieu quand un vidage de l'au moins un récipient de collecte de déchets (12) associé est déjà planifié pendant la fenêtre temporelle définissable, et
au moins un actionneur (20) est configuré pour, lors de l'actionnement, transmettre sans fil un signal à la systématique de programme (16),
moyennant quoi un enlèvement de déchets (22) emballés de manière étanche au vide au moyen du dispositif de mise sous vide (24), pendant une fenêtre temporelle définissable, par un véhicule de service de livraison de colis (44), est demandé.

2. Système d'évacuation des déchets (10) selon la revendication 1, **caractérisé en ce que** l'au moins un actionneur (20) manuel est réalisé sous la forme d'un appareil de communication mobile.

3. Système d'évacuation des déchets (10) selon la revendication 1 ou 2, **caractérisé en ce que** le système d'évacuation des déchets (10) comprend en outre au moins un agencement de casiers (28) destinés à la réception et à la conservation sécurisées de déchets (26) ou matières recyclables mis sous vide ou emballés et/ou de colis livrés par un service de livraison de colis.

4. Système d'évacuation des déchets (10) selon la revendication 3, **caractérisé en ce que** les casiers (30) de l'agencement de casiers (28) possèdent respectivement au moins une paroi de séparation (32) apte à être fixée de manière variable, destinée à l'établissement variable de zones (34, 36) séparées les unes des autres au sein des casiers (30).

5. Système d'évacuation des déchets (10) selon l'une des revendications 3 ou 4, **caractérisé en ce que** l'agencement de casiers (28) possède un système de sécurité (38) qui bloque l'ouverture des différents casiers (30), une unité d'entrée (40), en particulier un pavé numérique, étant fixée sur le côté extérieur de chaque casier (30), ladite unité d'entrée débloquant l'ouverture du casier (30) correspondant lors de l'entrée correcte d'une clé de sécurité (42) définissable, en particulier une combinaison de chiffres, et les casiers (30) pouvant être verrouillés par l'entrée de la clé de sécurité (42) correspondante dans l'unité d'entrée (40) respective.

6. Système d'évacuation des déchets (10) selon l'une des revendications 3 à 5, **caractérisé en ce que** l'agencement de casiers (28) est disposé à l'intérieur de la zone d'entrée de l'unité d'habitation ou commerciale (11) associée à l'au moins un récipient de collecte de déchets (12) respectif.

7. Système d'évacuation des déchets (10) selon l'une des revendications précédentes, **caractérisé en ce que** la position, le niveau actuel de remplissage, le type de contenu, la contenance ou le moment probable d'atteinte du niveau de remplissage maximal du récipient de collecte de déchets (12) respectif peuvent être détectés au moyen de l'au moins un capteur (13) de l'au moins un récipient de collecte de déchets (12).

8. Procédé d'évacuation des déchets (22) au moyen d'un système d'évacuation des déchets (10) selon la revendication 1, le procédé comportant les étapes suivantes :
détection de l'au moins un paramètre d'état du contenu du récipient de collecte de déchets respectif et/ou du récipient de collecte de déchets (12) au moyen de l'au moins un capteur (13) de l'au moins un récipient de collecte de déchets (12),
transmission sans fil des données de capteur à la systématique de programme (16),
calcul d'un itinéraire (18, 18') optimal, en particulier un itinéraire le plus rapide, le plus court ou économiquement optimal, avec prise en compte par la systématique de programme (16) des données de capteur actuelles transmises ainsi que, de préférence, également de données en temps réel basées sur la circulation, et
transmission sans fil des données d'itinéraire mises à jour par la systématique de programme (16) à l'au moins un véhicule de collecte de déchets (14), **caractérisé en ce que**
par l'actionnement de l'au moins un actionneur (20) manuel, un vidage de l'au moins un récipient de collecte de déchets (12) associé pendant une fenêtre temporelle définissable est directement demandé, un signal étant transmis sans fil à la systématique de programme (16), à la suite de quoi l'itinéraire (18, 18') de l'au moins un véhicule de collecte de déchets (14) est adapté de telle manière qu'un vidage de l'au moins un récipient de collecte de déchets (12) associé à l'actionneur (20) est effectué pendant la fenêtre temporelle définissable, un nouveau calcul de l'itinéraire (18, 18') optimal n'ayant pas lieu quand un vidage de l'au moins un récipient de collecte de déchets (12) associé est déjà planifié pendant la fenêtre temporelle définissable,
et **en ce que** des déchets (22) sont emballés de manière étanche au vide au moyen du dispositif de mise sous vide (24), un enlèvement des déchets (22) emballés sous vide pendant une fenêtre temporelle définissable par un véhicule de service de livraison de colis (44) étant demandé par l'actionnement de l'au moins un actionneur (20) manuel, un signal étant transmis sans fil à la systématique de programme (16) et la systématique de programme (16) transmettant, sans fil, un signal au véhicule de service de livraison de colis (44) ou à la seconde systématique de programme.

9. Procédé selon la revendication 8, **caractérisé en ce que** les déchets emballés sous vide ou des matières formant déchets ou matières recyclables (26) emballées dans une caisse sont enlevés par un service de livraison de colis (43) et transférés à une installation d'évacuation des déchets ou un service d'évacuation des déchets, les colis (46) à livrer et les déchets sous vide enlevés ou les matières formant déchets ou matières recyclables (26) emballées dans une caisse étant stockés de manière particulièrement avantageuse dans des zones (50, 52) du véhicule de service de livraison de colis (44) séparées les unes des autres par au moins une paroi de séparation (48) apte à être fixée de manière variable.

10. Procédé selon la revendication 9, **caractérisé en ce qu'**aussi bien des déchets sous vide ou des matières formant déchets ou matières recyclables (26) emballées dans une caisse que des colis (46) livrés par un service de livraison de colis (43) sont reçus et conservés de manière sécurisée au moyen d'un agencement de casiers (28) et peuvent ainsi être échangés à des moments arbitraires, les casiers (30) de l'agencement de casiers (28) possédant de préférence respectivement au moins une paroi de séparation (32) apte à être fixée de manière variable, destinée à l'établissement variable de zones (34, 36) séparées les unes des autres au sein des casiers (30).

11. Procédé selon la revendication 10, **caractérisé en ce que**, pour déposer ou enlever des déchets (26) sous vide et/ou colis (46), une clé de sécurité (42) définissable, en particulier une combinaison de chiffres, doit être entrée dans une unité d'entrée (40), en particulier un pavé numérique, qui est fixée sur le côté extérieur des casiers (30) de l'agencement de casiers (28), la clé de sécurité (42) étant de préférence échangée entre l'utilisateur du casier (30) et le service de livraison de colis (43).

12. Procédé selon l'une des revendications 9 à 11, **caractérisé en ce que**, par l'actionnement de l'au moins un actionneur (20) manuel, un enlèvement de déchets sous vide ou de matières formant déchets ou matières recyclables (26) emballées dans une caisse, de préférence pendant une fenêtre temporelle définissable, par un service de livraison de colis (43), est demandé.

13. Procédé selon l'une des revendications 8 à 12, **caractérisé en ce que** l'au moins un véhicule de collecte de déchets (14) transmet, sans fil, à des intervalles définis, de préférence en temps réel, des données à la systématique de programme (16), l'itinéraire (18, 18') optimal étant adapté par la systématique de programme (16) en fonction des données et transmis sans fil en retour à l'au moins un véhicule de collecte de déchets (14).

14. Procédé selon la revendication 13, **caractérisé en ce que** les données transmises par le véhicule de collecte de déchets (14) concernent la position actuelle du véhicule et/ou le niveau de remplissage actuel et/ou le niveau de carburant actuel.
